# EUROPEAN PATENT APPLICATION

(11) **EP 3 875 313 A1**
(43) Date of publication of application: **08.09.2021**
(21) Application number: 19894259.1
(22) Date of filing: 02.10.2019
(51) Int. Cl.: B60P 3/34, B60P 3/36, B60P 7/02, B60K 16/00, E04H 15/08

(54) **VARIABLE EXPANSION APPARATUS FOR ACTIVITY SPACE OF CAMPING CAR**

(30) Priority: 04.12.2018 KR 20180154338
(71) Applicant: Lee, Seungwook, Gyeongsangbuk-do 37360 (KR)
(72) Inventor: Lee, Seungwook, Gyeongsangbuk-do 37360 (KR)
(74) Representative: Walaski, Jan Filip
(86) International application number: PCT/KR2019/012973
(87) International publication number: WO 2020/116764

(57) **Abstract**

The present invention relates to a variable expansion apparatus for an activity space of a camping car, which enables residential activities and daily life activities in an activity space generated by a variable member and a variable apparatus provided in a loading box when being used for the purpose of camping or residence, and when moving, accommodates the variable member in a variable member arrangement space of the loading box so as to be operated as a wing body truck

## Description

### [Technical Field]

The present disclosure relates to a house expander for a camping car, and more particularly to a house expander for a camping car, in which residential furnishings, such as furniture that is necessary for residential activities, are arranged in a cargo box that constitutes a tower of a vehicle and a variable member for building a variable activity space for activities such as cooking, sleeping, rests, and business is further provided, and residential activities are made in the activity space created by the variable member provided in the cargo box and a variable device when the camping car is used for camping or residence and the camping car travels as a wing body tower vehicle as the variable member is received in a variable member arranging space of the cargo box.

### [Background Art]

Demands of modern people on camping cars that are residential equipment for enjoying romance and rests while families are camping in tour sites and resorts as long-distance tours of a long time as modern leisure activities for happy, attractive, and joyful lives through physical and mental health have gradually increased, and accordingly, camping grounds for units of camping families have been spotlighted.

Human beings have lived in houses having structures of today that are sanitary and convenient for residential lives after living houses for thousands of years, and planar arrangement structures of houses reduce contacts due to residential activities, and double arrangement structures, in which two rows of rooms rather than a single row of rooms are arranged, have been generalized in consideration of efficiency and convenience, such as loss of heat due to cooling and heating.

Sanitation and health have been considered in the residential space arrangement spaces by installing partition walls for compartments and separating the rooms to block smoke, smells, and noise generated during cooking, and sanitation and health according to purposes and objectives have been considered by providing rooms, in which kitchens for cooking, living rooms for sleeping and rests, and bathrooms for relieving oneself, washing, and shower are provided.

These structures have been built through evolutions through long-time experiences and habits, but the rooms of most of camping cars, caravans, and mobile houses are not divided due to restrictions of the widths of roads so that kitchens and living rooms are not divided and residential spaces, for example, for cooking, sleeping, rests, and business are made in the same spaces even though rooms having structures and forms that are optimized to residential activities are present, so that the residential activity environments of the camping cars and the like are inconvenient due to smoke, smells, and noise.

Meanwhile, because all vehicles, which travel on general roads, having a length of more than 13.0 m, a total width of more than 2.5 m, and a height of more than 4.0 m cannot travel due to road structure conditions such as the widths of lanes, and the heights and radii of curvature of roads, and thus the widths of the vehicle are restricted to 2.5 m or less, so that the widths of the residential spaces of the camping cars, the caravans, and the mobile houses that travel by using vehicles cannot exceed 2.5 m and the residential environments according to the residential activities are too inconvenient and bad for users to live for a long time as they are insanitary as compared with the houses.

There is a camping car (hereinafter, referred to as "a mounting type camping car") that is manufactured in the form of a house (booth) having convenient facilities, such as kitchen facilities, sleeping facilities, and toilet facilities in the interior thereof such that a house is mounted on a cargo box of a vehicle or a camping car (hereafter, referred to as "a pulling type camping car") that is connected to the vehicle to be pulled.

The mounting type camping car may be utilized more conveniently in tours in which users move frequently, and the pulling type camping car may stay at desired sites for a long time and is advantageous in tours for leisure.

Although the mounting type camping car and the pulling type camping car, which have been described above, may freely move to desired sites and uses may feel comfortable as if they lived at homes even in fields by using the convenient facilities provided in the houses, the interior spaces of the houses are very narrow as the sizes of the houses cannot exceed a specific size to protect various facilities installed on roads and protect the vehicles from obstacles. As a measure for solving this, a solution of solving the narrow spaces of the houses by extending the lengths of the houses may be considered, but manufacturing costs increase and other problems may be caused during driving of the vehicles so that it cannot be a proper solution.

For examples of mounting type camping cars, Korean Patent Application No. 10-2004-0071690 entitled "Camping Car", Korean Patent No. 10-0983626 entitled "Camping Car Having Expanded Side Panels", Korean Utility Model No. 20-0402023 entitled "Camping Car", and Korean Patent No. 10-0794475 entitled "Camping House Mounted on Cargo Box of Vehicle" may be referred, and for examples of pulling type camping cars, Korean Patent No. 10-0732386 entitled "Pulling Type Camping Car", Korean Patent No. 10-1260794 entitled "Trailer Type Camping Car", Korean Patent Application Publication No. 10-2013-0095887 entitled "Mobile Simple Room", and Korean Patent No. 10-1048471 entitled "Interior Space Variable Mechanism for Camping Car" may be referred.

Among the above-mentioned camping cars, in Korean Patent No. 10-0794475 entitled "Camping House Mounted on Cargo Box of Cargo Vehicle", a house is mounted on a vehicle to move freely, and a side surface of the house may be opened to be used as a shield if necessary, and an extension plate extending laterally may be extracted from the bottom surface to expand a use space.

However, according to the above-mentioned mounting type camping car, a shield effect may be achieved by unfolding the side wall of the cargo box of the house, but the side wall itself cannot perform the function of a tent in addition to the shield function as it is metallic and is not flexible, and its manufacturing costs are high and it requires a keeping place after a tour, so that it is not widely used.

Furthermore, according to the mounting type camping car, because special equipment such as a crane is necessary to mount or separate the house on or from the cargo box, the house is always moved together with the vehicle while being mounted on the cargo box of the vehicle, so that manufacturing costs are very high and it requires a proper keeping place for keeping the house for a long time and it is difficult to use it after separating the vehicle even not during tours.

Meanwhile, according to the pulling type camping car, the vehicle and the house can be separated while tours are not made because it is pulled by the vehicle so that the vehicle may be used, but it also requires a proper keeping place for keeping the house and its costs are high.

As described above, the mounting type camping cars and the pulling camping cars have advantages and disadvantages according to their forms, but have the same problem of narrow use spaces.

(Patent Document 1) Korean Patent Application Publication No. 10-2004-0071690

(Patent Document 2) Korean Patent No. 10-0983626

### [Disclosure]

### [Technical Problem]

Accordingly, the present disclosure has been made in an effort to solve the above problems, and a technical objective of the present disclosure is to provide a house expander for a camping car , in which residential furnishings, such as furniture that is necessary for residential activities, are arranged in a cargo box that constitutes a tower of a vehicle and a variable member for building a variable activity space for activities such as cooking, sleeping, rests, and business is further provided, and residential activities are made in the activity space created by the variable member provided in the cargo box and a variable device when the camping car is used for camping or residence and the camping car travels as a wing body tower vehicle as the variable member is received in a variable member arranging space of the cargo box.

### [Technical Solution]

In order to solve the above technical objectives, the present disclosure provides a house expander for a camping car, including an interior space 15 of a cargo box 10, in which a front wall 11, a rear wall 12, a ceiling 13, and a bottom 14 are connected to each other to form the interior space having a box shape, movable wing bodies 20 provided on opposite sides of an upper side of the ceiling 13 by hinges 21 and rotated by the hinges 21 to be opened and moved in a state in which opposite openings 95 of the interior space 15 of the cargo box 10, a hexahedral shape of which is formed as inner surfaces of the ceiling 13, the front wall 11, the rear wall 12, and the bottom face each other, roller type awnings 72 that block direct light and rainwater by moving the movable wing bodies 20 and interwork with the movable wing bodies 20 to be inserted and extracted on an inside of the movable wing bodies 20, vertical side wall arranging spaces 43 and horizontal variable member arranging spaces 44 that receive variable expansion devices that are to form activity spaces 61 by using vertical walls 30 and horizontal variable members 40 formed on an inside of the movable wing bodies 20 located on opposite sides of the interior space 15 of the cargo box 10, front vertical members 45 horizontally moved to opposite sides of the interior space 15 of the cargo box 10 along guiderails 34 on inner surfaces of the left vertical support members 31 and the right vertical support members 32 after the left vertical support members 31, the right vertical support members 32, and the front vertical members 45 are arranged in the vertical side wall arranging spaces 43, the left vertical support members 31 and the right vertical support members 32 are rotated by 90° about hinges 37 formed on the outsides of the opposite openings 95, and the left vertical support members 31 and the right vertical support members 32 arranged in the vertical side wall arranging spaces 43 are rotated by 90° to be opened, upper panels 41 corresponding to the horizontal variable members 40, sides of which are hinge-connected to upper support stoppers 121 of the upper ceiling 13 and opposite sides of which are hinge-connected to upper ends of the front vertical members 45 arranged in the vertical side wall arranging spaces 43 so that the upper panels 41 are unfolded in a continuously foldable manner, lower panels 42 arranged on lower sides of the upper panels 41 of the horizontal variable member arranging spaces 44, sides of which are hinge-connected to the bottom 14, and opposite sides of which are hinge-connected to lower support stoppers 122 at lower end of the front vertical members 45 so that the lower panels 42 are unfolded in a continuously foldable manner, and a driver that drives the movable wing bodies 12, and the left vertical support members 31, the right vertical support members 32, and the front vertical members 45 constituted by the vertical walls 30, and the cargo box 10 is any one of a camping car, a caravan, and a mobile house that travels on a road, furnishings 19 such as furniture and household goods that are necessary for camping and residential activities are arranged in the interior space 15 of the cargo box 10, the variable expanded activity space 61 for cooking, sleeping, rests, and business activities is formed by expanding and installing the vertical side wall 30 and the horizontal variable member 40, the movable wing body 20 is closed when the cargo box 10 is moved such that the cargo box 10 travels as a wing body tower vehicle, and residential activities are possible through the expanded activity space 61 during camping or residence.

Then, opening type guiderail receivers 178 and guide rails 34 are further provided at facing lower portions of the insides of the left vertical support members 31 and the right vertical support members 32, movement rollers 35 are provided on opposite sides of lower ends of the front vertical members 45 to allow the front vertical members 45 to easily exit and enter along the guiderails 34 unfolded from the left vertical support members 31 and the right vertical support members 32, and rail coupling grooves 177 mounted on the guiderails 34 rotated from the guiderail receivers 178 of the left vertical support members 31 and the right vertical support members 32 to couple the vertical side walls 30 and the lower panels 42 are provided on bottom surfaces of sides of the lower panels 42 that are to be arranged in the horizontal variable member arranging spaces 44.

Furthermore, the upper panels 41 constituted by the horizontal variable members 40 form the ceilings of the variable activity spaces 61, and the lower panels 42 form the bottoms of the variable activity spaces 61, and the front vertical members 45, the left vertical support members 31, and the right vertical support members 32 constituted by the vertical side walls 30 are manufactured to have lengths and heights that are the same as the length and the height of the cargo box 10, and are arranged on side surfaces of the cargo box 10 in the sequence of the front vertical members 45, the left vertical support members 31, and the right vertical support members 32 from the inner side.

Further, the horizontal members 40 are arranged in the horizontal variable member 40 spaces of the interior space 15 of the cargo box 10 to be symmetrical upwards and downwards, by dividing a panel having a large width, which has the same length as that of the cargo box, into a plurality of panels having a height that is less than half a height of the cargo box 10, manufacturing the continuous foldable upper and lower panels 41 and 42 having a Z shape with the hinges 171 that rotate by 180° such that the divided panels may be folded and unfolded such that surfaces thereof face each other, mounting the manufactured continuously foldable upper and lower panels 41 and 42 such that sides of the upper panels 41 are arranged at upper support stoppers 121 of the ceilings 13 of the horizontal variable member arranging space 44 of the cargo box and opposite sides thereof are disposed at upper portions of the front vertical members 45 to form a W shape downwardly with the hinges 171 that rotate by 90°, and mounting the lower panels such that sides of the lower panels 42 are arranged at the lower support stoppers 122 of the bottoms 14 at lower portions of the horizontal variable member upper panels 41 corresponding to the upper panels 41 and opposite sides thereof are arranged at lower portions of the front vertical members 45 to form an M shape downwardly with the hinges 171 that rotate by 90°, and the guiderails 34 are mounted on the guiderail insertion parts 43 of the lower panels by the gravitational force of the horizontal members 40 when the upper panels 41 and the lower panels 42 are completely unfolded whereby the activity spaces 61 having the roofs, the bottoms, and the walls are built by the variable structures to which the vertical side walls 30 and the horizontal variable members 40 are coupled.

Further, foldable awnings 102 rotated by the hinges 171 are provided at the outsides of upper ends of the front vertical members 45, and solar panels 106 are further provided on the upper surfaces of the foldable awnings 102 to supply electric power that is necessary for camping and residential activities, and the angles of the solar panels 106 are adjusted according to the location of the sun by mounting the hinges 171 that rotate by 180° on the foldable awnings 102.

Each of the left and right sides of the cargo box 10 may be partitioned into a plurality of compartments, the movable wing body 20, the left vertical support member 31, the right vertical support member 32, and the horizontal variable member 40 are provided in each cargo box 10 so that only necessary compartments may be selectively used.

Further, the furnishings that are necessary for activities and the vertical walls 30 and the horizontal variable members 40 for building the variable activity space 61 are provided in the interior space 15 of the cargo box 10 that constitutes the tower of the vehicle, and the activity space 61 made by the vertical side walls 30, the horizontal variable members 40, and the variable device provided in the cargo box 10 is used as the activity space 61 such as cooking, sleeping, rests, and business when the camping car is used for camping or residence, and the vertical side walls 30 and the horizontal variable members 40 area received in the vertical side wall spaces 43 and the horizontal variable member arranging spaces 44 of the interior space 15 of the cargo box 10 whereby the camping car travels as a wing body tower vehicle to realize the configuration of the interior and the activity space of the cargo box.

### [Advantageous Effects]

According to the present disclosure, residential furnishings, such as furniture that is necessary for residential activities, are arranged in a cargo box that constitutes a tower of a vehicle and a variable member for building a variable activity space for activities such as cooking, sleeping, rests, and business is further provided, and residential activities may be made in the activity space created by the variable member provided in the cargo box and a variable device when the camping car is used for camping or residence and the camping car may travel as a wing body tower vehicle as the variable member is received in a variable member arranging space of the cargo box, whereby the camping car is provided with both usability and transportability.

### [Description of Drawings]

FIG. 1 is an exemplary perspective view of a rear side of a house expander for a camping car according to the present disclosure;
FIG. 2 illustrates an in-use embodiment according to the present disclosure, and is an exemplary cross-sectional view, in which one side of a camping car cargo box corresponds to the locations of a furnishing space, a horizontal variable member arranging space, and a vertical side wall space and an opposite side of the camping car cargo box corresponds to an arrangement state of a horizontal variable member and a vertical side wall, which are viewed from the rear side;
FIG. 3 is an exemplary view of a state in which a wing body is rotated and opened in a state of FIG. 2;

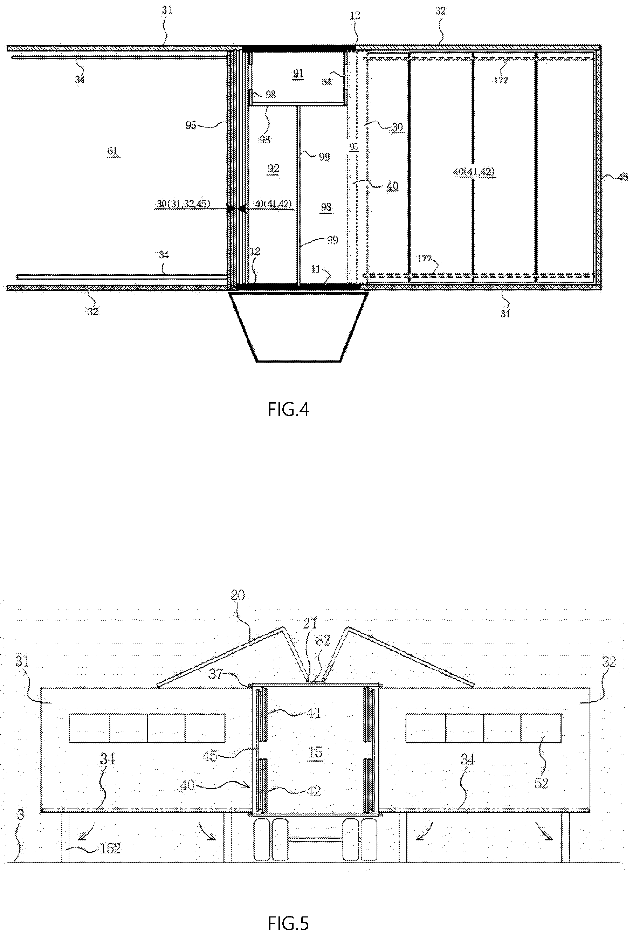

FIG. 4 is an exemplary view illustrating a structure of a cargo box interior space according to the present disclosure, one side of which corresponds to a state in which a left vertical support member and a right vertical support member are opened to form an activity space and an opposite side of which corresponds to a state in which the left vertical support member and the right vertical support member, which have been unfolded, are moved by a front vertical member so that inner surfaces of the left vertical support member and the right vertical support member are viewed on a plane, in which the an upper panel and a lower panel interwork with each other to be unfolded;
FIG. 5 is an exemplary view illustrating a state in which the left vertical support member and the right vertical support member are rotated by 90° and opened to be unfolded in opposite directions of the cargo box in a state of FIG. 3;
FIG. 6 is an exemplary view illustrating a state in which the upper panel and the lower panel constituted as the horizontal variable member and a movable wing body interwork with the front vertical member to be moved simultaneously in a process of moving the front vertical member in opposite directions of the cargo box in a state of FIG. 5;
FIG. 7 is an exemplary view illustrating a state in which the horizontal variable member is unfolded in opposite directions of the cargo box according to the present disclosure;
FIG. 8 is an exemplary view illustrating a state in which a foldable awning, which is rotated in a hinge manner, and a solar panel are installed on an outer side of an upper end of the front vertical member to be rotatable according to the present disclosure;
FIG. 9 is an exemplary view illustrating a state in which a guiderail formed on lower surfaces of the left vertical support member and the right vertical support member is moved by a movement roller of the front vertical member in a state in which the guiderail is rotated in a guiderail receiver according to the present disclosure;
FIG. 10 is an exemplary view illustrating a state in which the lower panel interworks with the guiderail to be completely unfolded when the lower panel is moved by the guiderail on lower inner surfaces of the left vertical support member and the right vertical support member such that a rail coupling groove of the lower panel is mounted on the guiderail so that the vertical side wall and the lower panel are completely coupled to each other according to the present disclosure;
FIG. 11 is an exemplary view illustrating a state in which one body of the movable wing body is unfolded along a wing body movement rail according to the present disclosure; and
FIG. 12 is an exemplary view illustrating a state in which the cargo box is partitioned into a plurality of compartments according to the present disclosure.

### [Mode for Invention]

Hereinafter, various embodiments of the present disclosure will be described with reference to the accompanying drawings. However, those of ordinary skill in the art will recognize that modifications, equivalents, and/or alternatives on the various embodiments described herein may be variously made without departing from the scope and spirit of the present disclosure. With regard to the description of drawings, similar components may be denoted by similar reference numerals.

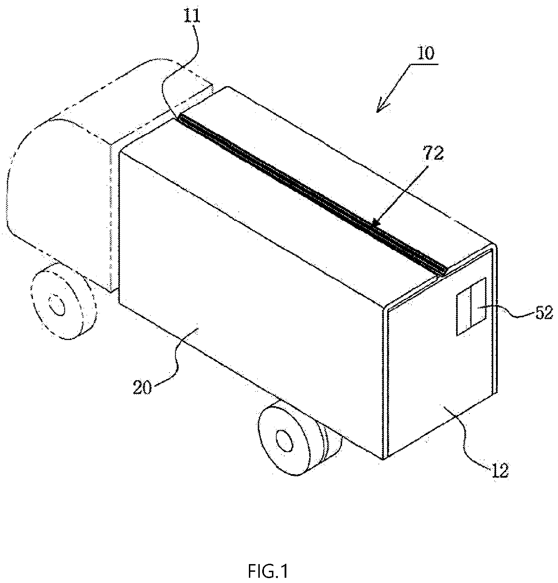

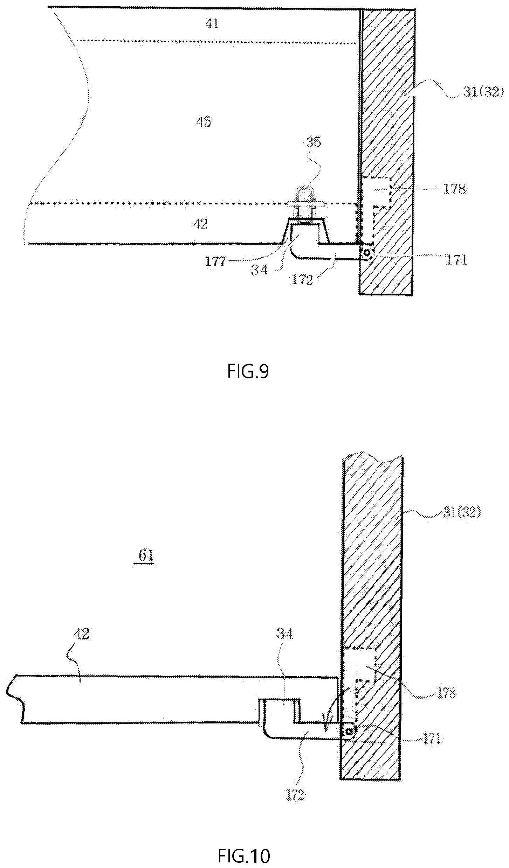

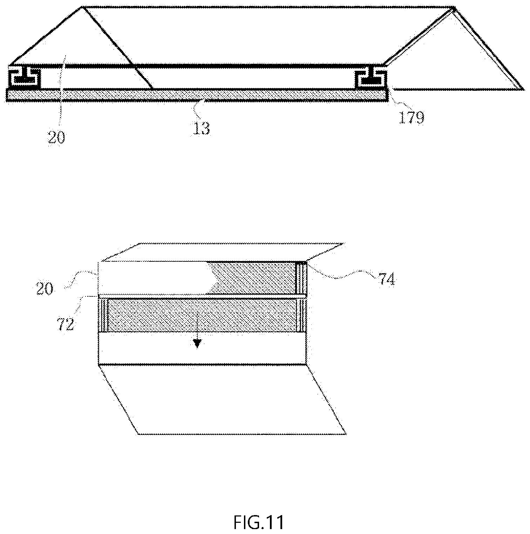

The present disclosure relates to a house expander for a camping car that further includes a variable member for making variable activity spaces for arranging furnishings, such as furniture that is necessary for residence and residential lives and household goods, which are necessary in life activities, in an interior space of a cargo box that constitutes a top of a vehicle, and for activities such as cooking, sleeping, rests, and businesses, in which residential activities are possible in the activity space formed by the variable member and a variable device provided in the cargo box when the camping car is used for the purpose of camping or residence and the camping car may travel as a wing body tower vehicle by receiving the variable member in a variable member arranging space of the interior space of the cargo box when the camping car moves, and, as illustrated in FIGS. 1 to 12, includes a cargo box 10, movable wing bodies 20, a roller type awning 72, vertical side wall spaces 43, horizontal variable member arranging spaces 44, front vertical members 45, horizontal variable members 40 each including an upper panel 41 and a lower panel 42, and drivers.

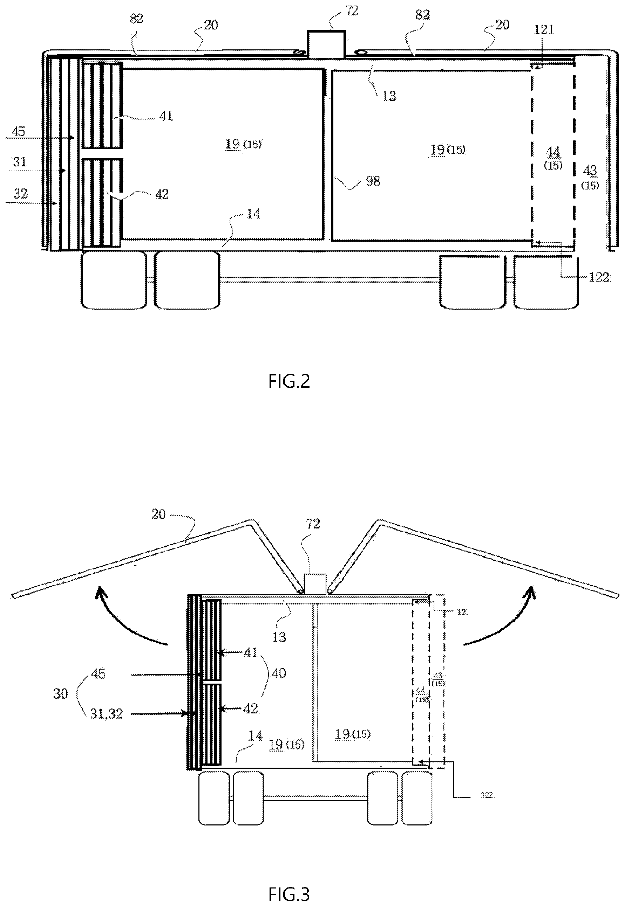

In order to implement the house expander for the camping car of the present disclosure, first, as illustrated in FIGS. 1 and 2, the cargo box 10 is constituted by connecting a front wall 11, a rear wall 12, a ceiling 13, and a bottom 14 to form an interior space 15 of a box shape.

The cargo box 10 is formed in a form of a mounting type camping car integrally installed in the vehicle, the front, rear, upper, and lower sides of the cargo box 10 are connected by the front wall 11, the rear wall 12, the ceiling 13, and the bottom 14, and as illustrated in FIG. 4, openings 95 are formed on opposite sides of the cargo box 10 to variably expand the interior space 15.

As illustrated in FIGS. 2 and 4, the horizontal variable member arranging space 44 for arranging the horizontal variable member 40 that is a variable expansion unit for the interior space 15 is set in a specific peripheral space of the opening 95 of the cargo box 10 and the cargo box 10 is classified into a left side, a right side, and a rear side in detail, except for the horizontal variable member arranging space 44. In the embodiment, independent room structures may be made by installing partition walls 98 and 99 to partition the cargo box 10 such that a kitchen space 92 is formed on any one of the left side or the right side thereof, a living room space 93 is formed on another side thereof, and a bathroom space 91 is installed on a rear side thereof.

Furthermore, furniture used in the kitchen and kitchen furnishings of household goods are arranged in the kitchen space 92, furniture used in the living room and living room furnishings of household goods are arranged in the living room space 92, bathroom furnishings related to washing, relieving oneself, and shower which are made in the bathroom, are arranged in the bathroom space 91, and doors 54, through which users may enter or exit, are provided between the partitioned spaces.

Then, it is preferable that the doors 54 are installed on opposite sides of the bathroom space 91 to allow users to enter or exit the kitchen space 92 and the living room space 93 through the bathroom space 91, that is, the bathroom space 91 also has an activity space to perform a movement passage function. As illustrated in FIG. 1, it is preferable that a window 52 for ventilation and shielding of light is installed on a rear outer wall of the bathroom space 19, that is, on the rear wall 12, and it is preferable that windows 52 are also installed on the left vertical support member 31, the right vertical support member 32, and the front vertical member 45, which will be described below.

Meanwhile, as illustrated in FIGS. 1 and 3, the movable wing bodies 20, in which vertical movements and horizontal movements thereof are fixed by hinges and rotations thereof are symmetrically made on opposite sides by hinges 21 such that the movable wing bodies 20 are moved along wing body movement rails 179 while being rotated and opened by the hinges 21 in a state in which the opposite openings 95 of the interior space 15 of the cargo box 10, which is defined as a hexahedral body as the inner surfaces of the ceiling 13, the front wall 11, the rear wall 12, and the bottom face each other, are provided on an upper side of the ceiling 13.

Roller type awnings 72 which block direct light and rainwater by moving the movable wing bodies 20 and interwork with the movable wing bodies 20 to be inserted and extracted are provided on an inside of the movable wing bodies 20.

The opposite sides of the opened cargo box 10 are blocked by the side walls of the movable wing bodies 20. As illustrated in FIG. 3, the vertical side wall spaces 43 and the horizontal variable member arranging spaces 44 that form the vertical side walls 30 and the horizontal variable members 40 and receive variable expansion devices by forming the activity space 61 by using the vertical side walls 30 and the horizontal variable members 40 are provided on the inner sides of the movable wing bodies 20 located on the opposite sides of the cargo box 10. The left vertical support member 31, the right vertical support member 32, and the front vertical member 45 are arranged in the vertical side wall spaces 43. The left vertical support member 31 and the right vertical support member 32 rotated by 90° about the hinges 37 formed on the outsides of the opposite openings 95 of the left vertical support member 31 and the right vertical support member 32, respectively to be opened are provided.

The opening states of the left vertical support member 31 and the right vertical support member 32 are illustrated in FIGS. 4 to 7, and the left vertical support member 31 and the right vertical support member 32 are located in a direction that is perpendicular to the opposite sides of the cargo box 10 forwards and rearwards.

Furthermore, the front vertical members 45 that are arranged in the vertical side wall spaces 43 and are horizontally moved to the opposite sides of the interior space 15 of the cargo box 10 along the guide rollers on the inner surfaces of the left vertical support member 31 and the right vertical support member 32 after the left vertical support member 31 and the right vertical support member 32 are rotated by 90° to be opened are further provided. Movement rollers 35 that allow the front vertical members 45 to exit and enter easily are formed along the guiderails 34 unfolded from the left vertical support member 31 and the right vertical support member 32.

The horizontal variable members 40 are located on the insides of the front vertical members 45, the right vertical support members 32 are located on the outsides of the front vertical members 45, and the front vertical members 45 are included in the vertical side walls 30.

The front vertical members 45, as illustrated in FIGS. 4 to 7, are vertical walls that define front wall surfaces that are inserted into and extracted from the opposite sides of the interior space 15 of the cargo box 10 along the guiderails 34 on the inner surfaces of the left vertical support member 31 and the right vertical support member 32 after the left vertical support member 31 and the right vertical support member 32 are rotated by 90° to be opened. In order to implement a structure that interworks with the horizontal variable members 40, the upper surfaces of the front vertical members 45 are mounted on the outside of the upper panels 41 and the lower surfaces of the front vertical members 45 are mounted on the outsides of the lower panels 42 by the hinges 37 that rotate by 90°.

Each of the horizontal variable members 40, as illustrated in FIGS. 3, 4, and 6, includes the upper panel 41, one side of which is hinge-coupled to an upper support stopper 121 of the upper ceiling 13 of the horizontal variable member arranging space 44 and an opposite side of which is hinge-coupled to an upper end of the front vertical member 45 arranged in the vertical side wall space 43 such that the upper panel 41 is unfolded in a continuous folding manner, the lower panel 42 arranged at a lower portion of the upper panel 41 of the horizontal variable member arranging space 44, and one side of which is hinge-coupled to the lower support stopper 122 and an opposite side of which is hinge-coupled to a lower end of the front vertical member 45 such that the lower panel 42 is unfolded in a continuously foldable manner, and the rail coupling groove 177 provided such that the horizontal variable members 40 are provided on the outer ceiling 13 and the bottom 42 of the interior space 15 of the cargo box 10 to be symmetrical to each other upwards and downwards and which forms the activity space 61 of a strong structure as the lower panels 42 are mounted on the guiderails 34 unfolded from the left vertical support member 31 and the right vertical support member 32 to couple the vertical side walls 30 and the lower panels 42.

The upper panel 41 is mounted on the ceiling 13 of the cargo box 10 and the lower panel 42 is mounted on the bottom 42 of the cargo box 10 by the hinges 37 that rotate by 90°, respectively.

Accordingly, when the front vertical members 45 are completely extracted to the opposite sides of the interior space of the cargo box 10 along the inner surfaces of the left vertical support members 31 and the right vertical support members 32, the lower panels 42 are unfolded horizontally, the guiderails 34 unfolded from the left vertical support member 31 and the right vertical support member 32 are inserted into the rail coupling grooves 177 on the bottom surfaces of the lower panels 42 so that the left vertical support members 31 and the right vertical support members 32 are coupled to the lower panels 42, and load of the lower panels 42 are transferred to the guiderails 34 of the left vertical support member 31 and the right vertical support member 32.

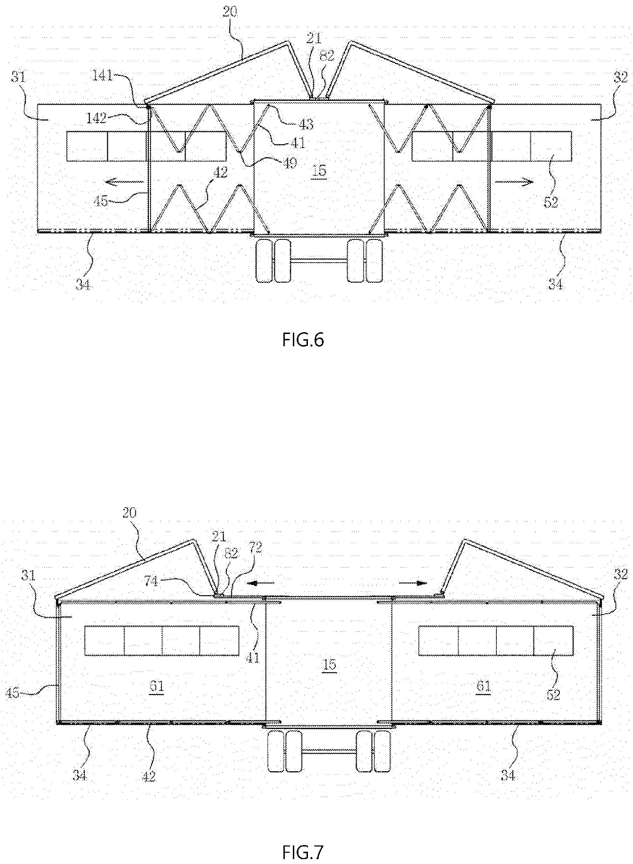

The upper panels 41 and the lower panels 42 of the horizontal variable member 40, as in FIG. 7, form the ceiling and the bottom that constitute the frame of the expanded room, and the front vertical members 45 form the front wall of the activity space. Due to the vertical side walls 30 constituted by the left vertical support member 31 and the right vertical support member 32, and the front vertical members 45, the activity spaces 61 variably expanded by a variation operation of the horizontal variable members 40 constituted by the upper panels 41 and the lower panels 42 are formed on opposite sides of the cargo box 10.

Then, the opening type guiderail receivers 178 and the guiderails 34 are further provided at facing inner lower portions of the left vertical support member 31 and the right vertical support member 32, the movement rollers 35 that allow the front vertical member 45 to be received and extracted along the guiderails 34 unfolded from the left vertical support member 34 and the right vertical support member 32 are provided on opposite sides of lower ends of the front vertical members 45, the rail coupling grooves 177 that are mounted on the guiderails 34 rotated from the guiderail receivers 178 of the left vertical support members 31 and the right vertical support members 32 to couple the vertical side walls 30 and the lower panels 42 are provided on the bottom surfaces of the sides of the lower panels 42, which are to be arranged in the horizontal variable member arranging spaces 44. Accordingly, the horizontal variable member 40 interworks with the front vertical member 45 by the hinges 37 mounted on upper and lower portions of the upper panels 41 and the lower panels 42 when the front vertical members 45 are moved by the movement rollers 35 slid in the guiderails 34.

Then, the guiderails 34 are formed on rotary members 172 coupled to hinges 171 in the guiderail receivers 178 to be rotated.

The vertical side walls 30 are arranged on inner surfaces of the movable wing bodies 20 that constitute the cargo box 10 of FIGS. 1 and 2, the horizontal variable members 40 are arranged on the inner sides of the vertical side walls 30, foldable awnings 102 are further provided at upper portions of the front vertical members 45, and foldable floors 104 are further provided at a lower portion of the front vertical member 45.

It is preferable that the front vertical members 33 constituted by the vertical side walls 30 are walls that will form a wall on the front surface of the activity space 61 and most parts of the walls may be installed to have the windows 52 for shielding of light, ventilation, and views, and the left vertical support members 31 and the right vertical support members 32 are walls that will form the wall surfaces on the left and right sides of the variable activity spaces and the windows 52 for shielding of light and ventilation are installed.

The upper panels 41 constituted by the horizontal variable members 40 form the ceilings of the variable activity spaces 61, and the lower panels 42 form the bottoms of the variable activity spaces 61.

The front vertical members 45, the left vertical support members 31, and the right vertical support members 32 constituted by the vertical side walls 30 are manufactured to have lengths and heights that are the same as the length and the height of the cargo box 10, and are arranged on side surfaces of the cargo box 10 in the sequence of the front vertical members 45, the left vertical support members 31, and the right vertical support members 32 from the inner side.

The lengths and the widths of the upper panels 41 and the lower panels 42 constituted by the horizontal variable members 40 are the same as a value obtained by adding the length of the cargo box 10 and the width of the horizontal variable member 40 arranging spaces of the cargo box.

The widths of the spaces of the horizontal member 40 arranging spaces are arithmetically determined according to the thicknesses of the panels and the number of the continuously foldable panels that are divided in detail.

Accordingly, the horizontal members 40 are arranged in the horizontal variable member 40 spaces of the interior space 15 of the cargo box 10 to be symmetrical upwards and downwards, by dividing a panel having a large width, which has the same length as that of the cargo box, into a plurality of panels having a height that is less than half a height of the cargo box 10, manufacturing the continuous foldable upper and lower panels 41 and 42 having a Z shape with the hinges 171 that rotate by 180° such that the divided panels may be folded and unfolded such that surfaces thereof face each other, mounting the manufactured continuously foldable upper and lower panels 41 and 42 such that sides of the upper panels 41 are arranged at upper support stoppers 121 of the ceilings 13 of the horizontal variable member arranging space 44 of the cargo box and opposite sides thereof are disposed at upper portions of the front vertical members 45 to form a W shape downwardly with the hinges 171 that rotate by 90°, and mounting the lower panels such that sides of the lower panels 42 are arranged at the lower support stoppers 122 of the bottoms 14 at lower portions of the horizontal variable member upper panels 41 corresponding to the upper panels 41 and opposite sides thereof are arranged at lower portions of the front vertical members 45 to form an M shape downwardly with the hinges 171 that rotate by 90°.

In relation to the upper panels 41 and the lower panels 42 arranged in the horizontal variable member arranging spaces 44, when the movable wing bodies 20 are opened and the left vertical support members 31 and the right vertical support members 32 are opened to the outside of the cargo box to be rotated by 90°, the guiderails 34 inserted into the guiderail receiving spaces on the lower walls of the left vertical support members 31 and the right vertical support member 32 are rotated, and the front vertical members 45 of the cargo box are extracted, the movement rollers 35 at lower portions of the front vertical members 45 are extracted along the guiderails 34 on the inner surfaces of the left vertical support member 31 and the right vertical support member 32 whereby the upper panels 41 and the lower panels 42 constituted by the horizontal variable members 40 interwork with each other to be unfolded. Then, the movable wing bodies 20 are also extracted along the wing body movement rails 179 whereby the movable wing bodies 20 form the expanded activity space 61 having a pair of roofs on the left and right sides of the cargo box 10.

Then, when the upper panels 41 and the lower panels 42 are completely unfolded, the guiderails 34 formed by moving the front vertical members 45 on the inner surfaces of the lower sides of the left and right vertical support members 31 and 32 are inserted into and coupled to the guiderail inserts 43 of the lower panels 42 that are the horizontal variable members 40. Thus, the upper sides of the front vertical members 45 are fixedly coupled to the upper panels 41 and the lower sides of the front vertical members 450 are fixedly coupled to the lower panels 42. Accordingly, the vertical side walls 30 and the horizontal variable members 40 constituted by the variable extending devices 30 and 40 are coupled to each other and thus the activity space 61 of the present disclosure, in which the walls, the ceiling, and the bottom are integrally formed, is made.

The horizontal variable members 40 and the vertical side walls 30 are important structures for additionally expanding the activity space 61 of a specific size, which will be used for residential activities. It is preferable that they are formed of a urethane material that is easily carried, is conveniently manipulated, has a light weight, has an excellent strength, and is widely used for known buildings and freezing tower vehicles, of which the insulation according to cooling and heating has been verified. It is preferable that their thicknesses are the same thickness as that of the freezing tower vehicle of about 6.0 cm.

It is preferable that the materials of the panels of the front walls 11, the rear walls 12, the ceilings 13, and the bottoms 14 are also the same as those of the horizontal variable members 40 and the vertical side walls 30.

It is preferable that the outer surfaces of the horizontal variable members 40, the vertical side walls 30, the front walls 11, the rear walls 12, the ceilings 13, and the bottoms 14, which will be manufactured of the urethane material are formed of a metallic exterior materials in consideration of their strengths and external appearances and the inner surfaces thereof are formed of urethane composite panels such as decorative materials, including wood panels that are luxurious and splendid. It is preferable that the continuously foldable upper panels 41 and the continuously foldable lower panels 42 is formed by reinforcing a steel material having an excellent tensile force in the urethane composite panels.

Then, in order to realize the upper panels 41 and the lower panels 42 in continuously foldable forms, hinges 49 that rotate by 180° are mounted between the upper panels 41 and the lower panels 42.

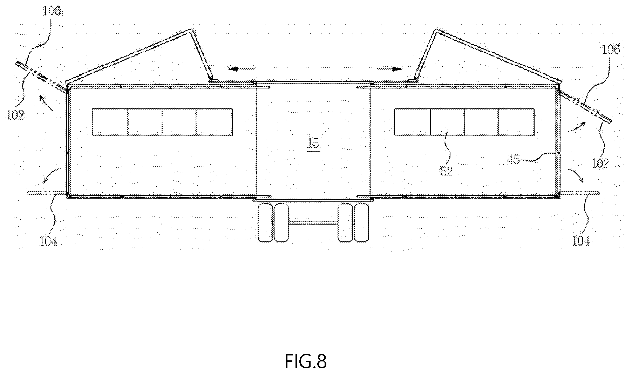

Furthermore, as in FIG. 8, foldable awnings 102 rotated by the hinges 171 are provided at the outsides of upper ends of the left vertical support members 31, the right vertical support members 32, or the front vertical members 45, solar panels 106 are further provided on the upper surfaces of the foldable awnings 102 to supply electric power that is necessary for camping and residential activities, foldable floors 104 are provided to the outsides of the lower ends of the left vertical support members 31, the right vertical support members 32, or the front vertical members 45 to be used as verandas or balconies, the angles of the solar panels 106 are adjusted according to the location of the sun by mounting the hinges 171 that rotate by 180°, the hinges 171 that rotate by 90° are mounted on the foldable floors 104, and ground surface supports 152 are further provided on the foldable floors 104.

Meanwhile, the present disclosure includes a driver that operates the movable wing bodies 20, the front vertical members 45, and the horizontal variable members 40. Then, the driver may be implemented by a mechanical, electrical, or electronic driving device, and a user may directly operate them with hands without using the driving device.

The opened movable wing body 20, as in FIG. 6, is stopped by the front vertical member 45 to be moved along the front vertical member 45 in a process of unfolding and moving the horizontal variable member 40 including the front vertical member 45, the upper panel 41, and the lower panel 42, and then, in detail, a hook 141 is formed on an inside of an end of the movable wing body 20 and a recess 142 is formed on a front surface of an upper end of the front vertical member 45 such that they are stopped by each other, and the hinges 21 of the movable wing body 20 is installed on the horizontal support plate 82 and the horizontal support plate 82 is moved along the roller type awning 72 formed on an upper surface of the ceiling 13 to be stopped as the front vertical member 45 is moved and interwork with the outside of the movable wing body 20.

Then, it is preferable that a stopper 74, as in FIG. 7, is provided at a front end of the roller type awning 72 to prevent deviation of the horizontal support plate 82 to the outside.

Meanwhile, as another embodiment, as in FIG. 5, ground supports 152 are provided on the outer surfaces of the left vertical support member 31 and the right vertical support member 32 to be rotatable, and lower ends of the ground supports 152 are fixed to the ground 3 while the ground supports 152 are rotated whereby the loads of the left vertical support member 31 and the right vertical support member 32 installed after the front vertical member 45, the upper panel 41, and the lower panel 42 are unfolded and installed may be supported.

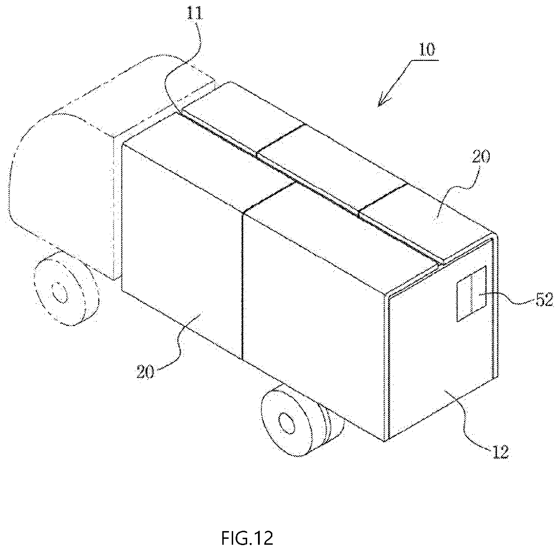

As another embodiment, as in FIG. 12, each of the left and right sides of the cargo box 10 may be partitioned into a plurality of compartments, the movable wing body 20, the left vertical support member 31, the right vertical support member 32, and the horizontal variable member 40 are provided in each cargo box 10 so that only necessary compartments may be selectively used. As in FIGS. 2 and 3, the upper end of the upper panel 41 located on the innermost side of the interior space 15 of the cargo box 10 may be restricted from entering the inside by the upper support stopper 121 formed at a lower side of the ceiling 13, and the lower end of the lower panel 42 may be restricted from entering the inside by the lower support stopper 122 formed at an upper side of the bottom 14.

In the present disclosure having the above configuration, the cargo box 10 is any one of a camping car, a caravan, and a mobile house that travels on a road, furnishings 19 such as furniture and household goods that are necessary for camping and residential activities are arranged in the interior space 15 of the cargo box 10, the variable expanded activity space 61 for cooking, sleeping, rests, and business activities is formed by expanding and installing the vertical side wall 30 and the horizontal variable member 40, the movable wing body 20 is closed when the cargo box 10 is moved such that the cargo box 10 travels as a wing body tower vehicle, and residential activities are possible through the expanded activity space 61 during camping or residence.

In order to help understanding by explaining the embodiment in the following, the present disclosure specifies the specifications of the wing body tower vehicle having a length of the vehicle of 5.0 m, a total width of the vehicle of 2.5 m, a length of the cargo box of 5.0 m, and a width of the cargo box of 2.1 m, and a height of the tower of 2.65 m, and other specifications also are possible.

The left and right side surfaces of the interior of the movable wing body 20 that constitutes the cargo box 10 of FIG. 2, which correspond to 0.2 m, are spaces, in which the vertical side wall 30 is to be received, and the left vertical support member 31, the right vertical support member 32, and the front vertical member 45 are arranged in the space.

A foldable awning 102 is further provided at an upper portion of the front vertical member 45 and the solar panel 106 is further provided on an upper surface of the foldable awning 102, and the foldable floor 104 is further provided at a lower portion of the front vertical member 45.

Among the specified width of 2.5 m of the cargo box 10 of the vehicle, the widths of 0.24 m of the left and right side surfaces become the horizontal variable member 40 arranging spaces. The space corresponding to the width of 1.62 m and the length of 5.0 m of the cargo box 10, except for the horizontal variable member 40 arranging space first is divided into two parts horizontally, and when the front surface of the cargo box 10 is divided into two parts to be divided into left and right side surfaces 92 and 93 after the front surface of the cargo box 10 is made to less than 3.5 m and the rear surface of the cargo box 10 is made to less than 1.5 m, the interior space 15 is partitioned into three parts 91, 92, and 93 as in FIG. 4.

When the width of 0.9 m of one side of the front surface of the cargo box 10 is made as the kitchen furnishing arranging space 93, the width of 0.72 m of an opposite side of the front surface of the cargo box is made as a living room furnishing arranging space 92, the width of less than 1.5 m of the front surface of the interior space 15 of the cargo box 10 is determined as the bathroom space 91 such that the spaces are separated by installing the partition walls 98 and 99 on the border lines of the spaces, and walls are installed on the border surfaces 11 and 12, except for the opening 95 for receiving the horizontal variable member 40 on the outside of the horizontal variable member arranging space 40 to form the independent living room furnishing space 92, the kitchen furnishing space 93, and the bathroom space 91, the length and the width of the living room furnishing space 92 is 3.44 m and 0.87 m, the length and the width of the kitchen furnishing space 93 is 3.44 m and 0.69 m, and the length and the width of the bathroom space 93 is 0.69 m and 1.52 m.

The living room activity space 61 and the kitchen activity space 61 variably expanded by the vertical side wall 30 and the horizontal variable member 40 are the activity space 61 illustrated in the present disclosure, and two compartments having a length of 5.0 m, a width of 5.0 m, and an area of 25.0 m² are formed on opposite side surfaces of the cargo box 10 so that new expanded activity spaces of 50.0 m² are formed on the outside of the cargo box 10 whereby the activity space 61 of 400% of the space of the cargo box 10 is formed.

The width of the space, in which the horizontal variable member 40 formed by the ceiling and the bottom of the compartment is to be disposed, is 0.24 m, and the width of the continuously foldable upper panel 41 and the width of the continuously foldable lower panel 42 are a length of 5.24 m obtained by adding the width of the horizontal variable member arranging space 44 to the length of the cargo box, respectively, and a total width is 10.48 m.

A measure and means for arranging the continuously foldable upper panel 41 and the continuously foldable lower panel 42 corresponding to 21 times of the horizontal variable member arranging space 44 of the cargo box 10 that is as narrow as 4.6% of the width of the horizontal variable member arranging space 40 as the lengths of the upper panel 41 and the lower panel 42 divided by the horizontal variable member is 2,183% of the horizontal variable member arranging space 40 of the cargo box 10 are the most important objective and technology of the present disclosure.

Accordingly, according to the present disclosure, in order to form the activity space 61, in the camping car, in which the vertical side walls 30 that form the walls on the front wall surface and the walls on the left and right side surfaces and the horizontal variable members 40 that form the ceilings and the bottoms are disposed on the left, right, and outer sides of the interior space 15 of the cargo box 10, and the variable expanding devices for the activity spaces 61, in which convenience facilities such as the household goods according to the residential activities and furnishings are arranged, are provided on the inner side of the cargo box 10, an activity space corresponding to a house or an environment that is simple, is made wider promptly, is sanitary, and comfortable may be built when the left vertical support member 31 and the right vertical support member 32 constituted by the variable vertical side walls 10 arranged in the cargo box 10 and the front vertical members 45 are extracted without using special equipment and skilled technology by any one when a user does camping activities and residential activities at a destination, whereby the present disclosure can significantly contribute to provision of long-time, confortable, and sanitary leisure activities and camping cultures.

According to the present disclosure having the above configuration, the furnishings that are necessary for activities and the vertical walls 30 and the horizontal variable members 40 for building the variable activity space 61 are provided in the interior space 15 of the cargo box 10 that constitutes the tower of the vehicle, and the activity space 61 made by the vertical side walls 30, the horizontal variable members 40, and the variable device provided in the cargo box 10 is used as the activity space 61 such as cooking, sleeping, rests, and business when the camping car is used for camping or residence, and the vertical side walls 30 and the horizontal variable members 40 area received in the vertical side wall spaces 43 and the horizontal variable member arranging spaces 44 of the interior space 15 of the cargo box 10 whereby the camping car travels as a wing body tower vehicle to realize the configuration of the interior and the activity space of the cargo box.

Although the present disclosure has been described with reference to the embodiments illustrated in the drawings, they are merely exemplary, and it is apparent that an ordinary person in the art can make various modifications and perform equivalent embodiments. Accordingly, the genuine technical scope of the present disclosure should be construed by the attached claims, and all the technical spirits within the equivalent ranges fall within the scope of the present disclosure.

## Claims

1. A house expander for a camping car, a caravan, or a mobile house, comprising:
a cargo box including a ceiling, a bottom, a front wall connecting the ceiling and an end of a front surface of the bottom, and a rear wall connecting the ceiling and an end of a rear surface of the bottom;
a left vertical support member hinge-coupled to front corners of the ceiling and the bottom to be rotatable, and configured to cover a side of the cargo box when being closed and expand a width of the front wall while contacting the front wall when being opened;
a right vertical support member hinge-coupled to rear corners of the ceiling and the bottom to be rotatable, and configured to cover the side of the cargo box when being closed and expand a width of the rear wall while contacting the rear wall when being opened;
an upper panel coupled to a side end of the ceiling in a foldable form and configured to expand the ceiling during an expansion operation;
a lower panel coupled to a side end of the bottom in a foldable form and configured to expand the bottom during an expansion operation; and
a front vertical member connected to ends of the upper panel and the lower panel to define a side wall.
